# EUROPÄISCHE PATENTSCHRIFT

(11) **EP 0 268 034 B1**
(45) Veröffentlichungstag und Bekanntmachung des Hinweises auf die Patenterteilung: **28.07.1993**
(21) Anmeldenummer: 87113286.6
(22) Anmeldetag: 11.09.1987
(51) Int. Cl.: G02F 1/015, G02F 1/31

(54) **Optischer Wellenleiter-Schalter mit einen Richtkoppler bildenden Streifen-Wellenleitern, der durch Injektion von Ladungsträgern geschaltet wird**
Charge carrier injection-controlled optical waveguide switch comprising a directional coupler formed by strip waveguides
Commutateur optique pour guides d'ondes contrôlé par injection de porteurs de charge, comprenant un coupleur directif formé par des guides d'ondes en ruban

(30) Priorität: 18.11.1986 DE 3639434; 05.12.1986 DE 3641559
(43) Veröffentlichungstag der Anmeldung: 25.05.1988
(73) Patentinhaber: ANT Nachrichtentechnik GmbH, D-71522 Backnang (DE)
(72) Erfinder: Unger, Hans-Georg, Dr. Ing., D-3300 Braunschweig (DE)

(56) Entgegenhaltungen:
- US-A- 4 185 884
- CONFERENCE RECORDS OF 100C-ECOC'85, 5TH INTERNATIONAL CONFERENCE ON INTEGRATED OPTICS AND OPTICAL FIBRE COMMUNICATION, Venezia, 1.-4. Oktober 1985, Seiten 357-360, Instituto Internazionale delle Communicazioni, Genova, IT; K. ISHIDA et al.: "InGaAsP/InP multimode optical switches operated by a carrier induced refractive index change"
- OPTICAL AND QUANTUM ELECTRONICS, Band 17, 1985, Seiten 449-455, Chapmann and Hall Ltd; O. MIKAMI et al.: "InGaAsP/InP optical waveguide switch operated by a carrier-induced change in the refractive index"
- ELECTRONICS LETTERS, Band 20, Nr. 19, 13. September 1984, Seiten 790-792, Staines, Middlesex, GB; M. FUJIWARA et al.: "Gigahertz-bandwidth InGaAsP/InP optical modulators/switches with double-hetero waveguides"

## Beschreibung

Die Erfindung betrifft einen optischen Wellenleiter-Schalter mit zwei einen Richtkoppler bildenden, aus Halbleitermaterial bestehenden Streifen-Wellenleitern und einem p-n-Übergang, der bezüglich der zwei Streifen-Wellenleiter so angeordnet ist, daß aus ihm Ladungsträger in die Koppelzone der Streifen-Wellenleiter injizierbar sind.

Ein derartiger optischer Wellenleiter-Schalter ist in dem Aufsatz "InGaAsP/InP Multimode Optical Switches Operated by a Carrier Induced Refractive Index Change" von K. Ishida, H. Nakamura, H. Inoue, S. Tsuji und H. Matsumura, Central Research Lab., Hitachi Ltd., Kokubunji, Tokyo 185, Japan, (International Conference on Integrated Optics and Optical Fiber Communications (100c) betreffend die European Conference on Optical Communication (ECOC) 1985 - 359) beschrieben. Er ist aus Multimode-Wellenleitern aufgebaut und arbeitet mit steuerbarer Totalreflexion in einem Wellenleiter-Kreuz.

In dem Aufsatz "InGaAsP/InP optical waveguide switch operated by a carrier-induced change in the refractive index" von Osamu Mikami, Hiroshi Nakagome, NTT Musashino Electrical Communication Laboratories, Nippon Telegraph and Telephone Corporation, 3-9-11, Midoricho, Musashino-shi, Tokyo 180, Japan, in "Optical and Quantum Electronics 17 (1985) 449-455", ist ebenfalls ein derartiger Wellenleiter-Schalter beschrieben, der für einmodige Wellenleiter geeignet ist.

Aus der US-A-4 185 884 ist ein schaltbarer optischer Koppler bekannt. Dabei werden in einem Substrat aus einem elektrooptischen Material dadurch zwei den Koppler bildende parallel nebeneinander verlaufende optische Wellenleiter gebildet, daß entsprechend dem Verlauf der Wellenleiter auf dem Substrat aufgebrachte Elektroden bei Anlegen einer Spannung den Brechungsindex im Substrat erhöhen. Die Kopplung der beiden Wellenleitern ist durch zwischen ihnen angeordnete Elektroden, die bei Anlagen einer Spannung eine Veränderung des Brechungsindex im Koppelbereich zwischen den beiden Wellenleitern bewirken, einstellbar.

Aufgabe der Erfindung ist es, einen optischen Schalter aufzuzeigen, der eine möglichst geringe Schaltleistung braucht, möglichst wenig Verluste hat, möglichst wenig parasitäre Rekombinationsstrahlung erzeugt und sich gut für die monolithische Integration mit anderen einmodigen, optischen, optoelektronischen und elektrooptischen Komponenten auf Halbleiter-Substraten eignet.

Erfindungsgemäß wird dies durch die im Hauptanspruch angegebenen Merkmale gelöst.

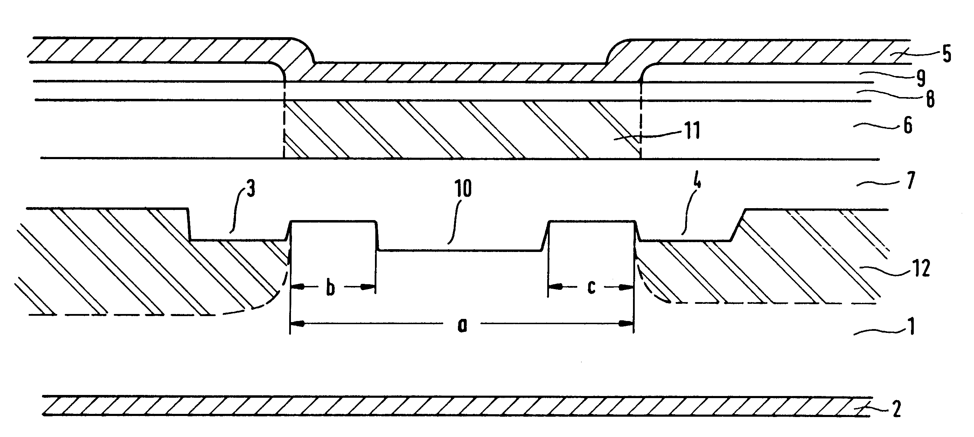

Anhand eines in der Figur dargestellten Ausführungsbeispieles soll im folgenden die Erfindung näher erläutert werden.

Die dargestellte Anordnung stellt zunächst einen Richtkoppler aus zwei Streifen-Wellenleitern, in Form von zwei invertierten Rippen-Wellenleitern 3 und 4, dar. Zusätzlich zu der wellenlängenselektiven Koppelwirkung dieses Richtkopplers läßt sich die Anordnung durch Injektion von Ladungsträgern in dem Bereich 13 zwischen den beiden Rippen-Wellenleitern 3 und 4 auch noch schalten. Es wird nämlich durch die Ladungsträger-Injektion in den Querschnitt 13 zwischen den Rippen-Wellenleitern 3 und 4 dort die Brechzahl so weit herabgesetzt, daß es kaum noch eine Verkopplung von Rippen-Wellenleiter 3 zum Rippen-Wellenleiter 4 gibt. Auf einem von unten mit einer Kontaktierung 2 versehenen und n-leitenden InP-Substrat 1 wird die Kopplerstruktur mit den zwei Rippen-Wellenleitern 3 und 4 aus an das InP gitterangepaßtem InGaAsP epitaktisch aufegwachsen. Dazu werden zuvor die zwei Rinnen für die Rippen-Wellenleiter 3 und 4 in das InP-Substrat 1 eingeätzt, und auch zwischen den Rinnen wird das Substrat 1 u.U. so weit abgeätzt, daß damit die richtige Verkopplung der von den Rippen-Wellenleitern 3 und 4 geführten Moden eingestellt wird. Erst dann werden mit selektiver Epitaxie die Vertiefungen im Substrat 1 mit gitterangepaßtem InGaAsP zugewachsen und auch der durchgehende Teil der InGaAsp-Schicht epitaktisch aufgewachsen.

Schon vor dieser Epitaxie wurden in das Substrat 1 mit Zn-Diffusion p-leitende Wannen 12 eingebracht, die bis an die inneren Flanken der Rippen-Wellenleiter 3 und 4 oder auch noch weiter reichen und so die Ladungsträger-Injektion von der n-Seite her auf den Bereich der Breite a begrenzen, bzw. sogar nur auf einen noch engeren Bereich. Auf die Wellenleiterschicht 7 aus InGaAsP wird dann eine InP-Mantelschicht 6 epitaktisch aufgewachsen, worüber eine wieder gitterangepaßte InGaAsP-Schicht 8 liegt, die als Kontaktzone dienen soll. Die Ladungsträger-Injektion auf der p-Seite der Struktur wird durch Zn-Diffusion hergestellt und zwar wieder über einen Querschnittsbereich 11 , der nur bis zu den inneren Rändern der Rippen-Wellenleiter 3 und 4 reicht bzw. sich komplementär zu den Diffusionswannen 12 im Substrat ausdehnt. Zur Begrenzung dieser Zn-Diffusion auf diesen Querschnittsbereich wird die InGaAsP-Kontaktschicht 8 zunächst mit einer SiO₂-Schicht weggeätzt, der gerade die für die Ladungsträger-Injektion gewünschte Breite hat, so daß dadurch die Maske 9 entsteht. Nach Eindiffusion der oberen p-Zone wird der freie Streifen schließlich sperrschichtfrei kontaktiert.

Die Brechzahlverminderung durch Ladungsträger-Injektion hat eine Erhöhung der Querdämpfung der von den Rippen-Wellenleitern 3 und 4 geführten Moden in den Bereichen zwischen diesen Rippen-Wellenleitern zur Folge und setzt damit die Kopplung zwischen den Rippen-Wellenleitern drastisch herab. Man erhält somit eine Schalterwirkung der Anordnung. Eine die Ladungsträger-Injektion steuernde Schaltspannung liegt zwischen einer Kontaktierung 5 des p-leitenden Zn-Diffusionsbereichs (11) und der Kontaktierung 2 auf dem n-leitenden InP-Substrat 1.

In Weiterführung der Erfindung wird die Anordnung mit ihren parallel verlaufenden Rippen-Wellenleitern 3 und 4 so ausgebildet, daß in dem Koppelspalt der Breite a zwischen diesen Rippen-Wellenleitern 3 und 4 durch einen zusätzlichen Rippen-Wellenleiter 10 eine indirekte Verkopplung der Rippen-Wellenleiter 3 und 4 über die dann noch bestehenden Koppelspalte b und c bewirkt wird. Die Ladungsträger-Injektion bewirkt dann, daß die vom zusätzlichen Rippen-Wellenleiter 10 geführte und zur Leistungsübertragung zu den Rippen-Wellenleitern 3 und 4 dienende Welle sich in ihrer effektiven Brechzahl ändert mit der Wirkung einer Verstimmung der wellenselektiven Kopplerstruktur, so daß zusätzlich die gesamte Kopplung weiter vermindert und damit die Schalterwirkung verbessert wird.

Die Vorteile der erfindungsgemäßen Anordnung sind insbesondere, daß nur geringe elektrische Leistungen ausreichen, um den Schalter zu steuern. Weil nämlich schon wenig Brechzahlminderung im Koppelspalt nicht nur die Koppelstärke drastisch mindert und damit auch die Koppellänge im umgekehrten Maße erhöht, brauchen nur wenig Ladungsträger injiziert und dementsprechend wenig Steuerleistung aufgewandt zu werden. Weniger Ladungsträger-Injektion bedeutet auch, daß sich die u.U. störende Rekombinationsstrahlung in entsprechend geringeren Grenzen hält. Zum Vorteil gereicht es der Anordnung auch, daß die Strahlungsabsorption durch die injizierten Ladungsträger nur in Bereichen auftritt, wo die geführte Welle bei der Ladungsträger-Injektion kaum noch Leistung führt. Die optischen Verluste des Schalters bleiben darum äußerst gering.

Besonders zeigen sich diese Vorteile, weil der optische Wellenleiter-Schalter mit dem zusätzlichen Rippen-Wellenleiter 10 ausgeführt wird und durch entsprechende Verengung des Zn-Diffusionsbereiches 11 und komplementäre Erweiterung der Diffusionswannen 12 die Ladungsträger nur noch über die Breite des Rippen-Wellenleiters 10 injiziert werden. Eine gut Schaltfunktion wird dann schon mit viel weniger Brechzahlminderung in diesem Bereich erreicht, weil schon eine geringe Änderung der effektiven Brechzahl des Rippen-Wellenleiters 10 ausreicht, um die Leistungsübertragung vom Rippen-Wellenleiter 3 zum Rippen-Wellenleiter 4 aufzuheben. Die elektrische Steuerleistung kann darum hier noch wesentlich kleiner sein. Störende Rekombinations-Strahlung bleibt dann auch viel geringer. Außerdem treten dann auch viel weniger Verluste durch Strahlungsabsorption der injizierten Ladungsträger auf, weil der zusätzliche Rippen-Wellenleiter 10 in diesem Zustand keine Strahlungsleistung mehr führt.

Zum Vorteil gereicht der Struktur mit dem zusätzlichen Rippen-Wellenleiter 10 auch der größere Abstand der beiden äußeren Rippen-Wellenleiter 3 und 4. Erstens braucht die Ladungsträger-Injektion dann nicht mehr auf den notwendigerweise engeren Bereich des Koppelspaltes a zwischen den nur zwei Rippen-Wellenleitern 3 und 4 begrenzt zu werden, sondern kann über die ganze Breite des Rippen-Wellenleiters 10 erfolgen oder sogar darüber hinausgehen. Das erleichtert die Herstellung der Struktur. Zweitens liegen die beiden äußeren Rippen-Wellenleiter 3 und 4 in einem größeren Abstand voneinander und sind dadurch außerhalb des Wellenleiter-Schalters von vornherein optisch voneinander isoliert, was auch die Integration mit anderen Schaltungskomponenten erleichtert.

## Patentansprüche

1. Optischer Wellenleiter-Schalter mit zwei einen Richtkoppler bildenden, aus Halbleitermaterial bestehenden Streifen-Wellenleitern und einem p-n-Übergang, der bezüglich der zwei Streifen-Wellenleiter so angeordnet ist, daß aus ihm Ladungsträger in die Koppelzone der Streifen-Wellenleiter injizierbar sind, dadurch gekennzeichnet, daß die zwei Streifen-Wellenleiter (3, 4) parallel nebeneinander, durch einen Koppelspalt (a) voneinander getrennt verlaufen und daß in diesem der Ladungsträgerinjektion ausgesetzten Koppelspalt (a) zwischen den beiden Streifen-Wellenleitern (3, 4) ein gegenüber diesen durch Spalte (b, c) getrennter dritter Streifen-Wellenleiter (10) verläuft.

2. Optischer Wellenleiter-Schalter nach Anspruch 1, dadurch gekennzeichnet, daß die zwei optischen Streifen-Wellenleiter (3, 4) aus InGaAsP bestehen und auf einem n-leitenden dielektrischen InP-Substrat (1) niederer Brechzahl aufgebracht sind, daß die Streifen-Wellenleiter (3, 4) mit einer InP-Mantelschicht (6) bedeckt sind, über der als Kontaktzone eine gitterangepaßte InGaAsP-Schicht (8) aufgebracht ist, daß in das Substrat (1) p-leitende Wannen (12) eingebracht sind, die sich außerhalb des der Ladungsträgerinjektion auszusetzenden Bereichs des Koppelspaltes (a) entlang der Außenseiten der zwei Streifen-Wellenleiter (3, 4) erstrecken, daß über der InGaAsP-Kontaktzone (8) eine SiO₂-Maske (9) aufgebracht ist, welche einen Zn-Diffusion bereich (11) im Bereich der Mantelschicht (6) auf den Bereich zwischen den Innenkanten der beiden Streifen-Wellenleiter (3, 4) begrenzt und daß zwischen einer Kontaktierung (5) auf dem Zn-Diffusionsbereich (11) und einer Kontaktierung (2) auf dem n-leitenden InP-Substrat (1) eine die Ladungsträger-Injektion steuernde Schaltspannung anlegbar ist.

## Claims

1. Optical waveguide switch with two strip waveguides, which form a directional coupler and consist of semiconductor material, and a p-n transition which is so arranged, with respect to the two strip waveguides, that from it charge carriers are injectable in the coupling zone of the strip waveguides, characterised thereby that the two strip waveguides (3, 4) extend parallelly close together and separated from one another by a coupling gap (a) and that a third waveguide (10) extends in this coupling gap (a), which is exposed to the charge carrier injection, between the two strip waveguides (3, 4) and separated relative to these by gaps (b, c).

2. Optical waveguide switch according to claim 1, characterised thereby that the two optical strip waveguides (3, 4) consist of InGaAsP and are applied to an n-conducting dielectric InP substrate (1) of lower refractive index, that the strip waveguides (3, 4) are coated with an InP cover layer (6), over which a lattice-matched InGaAsP layer (8) is applied as contact zone, that p-conducting troughs (12), which extend along the outer sides of the two strip waveguides (3, 4) outside of the region of the coupling gap (a) exposed to the charge carrier injection, are made in the substrate (1), that a SiO₂ mask (9), which bounds a Zn diffusion zone (11) in the region of the cover layer (6) on the region between the inner edges of the two strip waveguides (3, 4), is applied over the InGaAsP contact zone (8), and that an unblocking voltage controlling the charge carrier injection can be applied between a contact (5) on the Zn diffusion zone (11) and a contact (2) on the n-conducting InP substrate (1).

## Revendications

1. Commutateur optique pour guides d'ondes, comprenant deux guides d'ondes en ruban formant un coupleur directif, en matériau sémi-conducteur, et une jonction p-n qui est disposée, par rapport aux deux guides d'ondes en ruban, de manière que des porteurs de charge provenant d'elle puissent être injectés dans la zone de couplage des guides d'ondes en ruban, caractérisé en ce que les deux guides d'ondes en ruban (3, 4) s'étendent parallèlement l'un à côté de l'autre, en étant séparés mutuellement par une fente de couplage (a), et qu'un troisième guide d'ondes en ruban (10) s'étend dans cette fente de couplage (a), exposée à l'injection de porteurs de charge, entre les deux guides d'ondes en ruban (3, 4), troisième guide d'ondes (10) qui est séparé par des fentes (b, c) par rapport à ces deux guides d'ondes (3, 4).

2. Commutateur optique pour guides d'ondes selon la revendication 1, caractérisé en ce que les deux guides d'ondes optiques en ruban (3, 4) sont en InGaAsP et sont disposés sur un substrat diélectrique (1) en Inp, de conductivité n et de faible indice de réfraction, que les guides d'ondes en ruban (3, 4) sont recouverts d'une couche enveloppe (6) en InP, par-dessus de laquelle est appliquée, en tant que zone de contact, une couche (8) en InGaAsP de réseau adapté, que des cuvettes (12) de conductivité p sont créées dans le substrat (1), cuvettes qui s'étendent à l'extérieur de la zone de la fente de couplage (a) à exposer à l'injection de porteurs de charge, le long des côtés extérieurs des deux guides d'ondes en ruban (3, 4), qu'un masque (9) en SiO₂ est appliqué par-dessus la zone de contact (8) en InGaAsP, masque qui limite une zone (11) de diffusion de Zn de la couche enveloppe (6) à la zone comprise entre les bords intérieurs des deux guides d'ondes en ruban (3, 4) et qu'une tension de commutation pour commander l'injection des porteurs de charge est applicable entre une couche de mise en contact (5) sur la zone (11) de diffusion de Zn et une couche de contact (2) sur le substrat (1) en InP de conductivité n.
